# EUROPEAN PATENT APPLICATION

(11) **EP 4 813 942 A1**
(43) Date of publication of application: **30.09.2026**
(21) Application number: 24912341.5
(22) Date of filing: 10.12.2024
(51) Int. Cl.: C04B 22/06, C04B 22/14

(54) **EXPANDABLE COMPOSITION AND EXPANDABLE ADMIXTURE**

(30) Priority: 28.12.2023 JP 2023222721
(71) Applicant: Denka Company Limited, Tokyo 103-8338 (JP)
(72) Inventor: MAEDA, Takumi, Tokyo 103-8338 (JP); HIGUCHI, Takayuki, Tokyo 103-8338 (JP)
(74) Representative: Viering, Jentschura & Partner mbB Patent- und Rechtsanwälte
(86) International application number: PCT/JP2024/043597
(87) International publication number: WO 2025/142452

(57) **Abstract**

An object of the present invention is to provide an expansion composition having an appropriate expansion ratio and capable of improving flexural strength, and an expansive admixture. The expansion composition contains free lime crystal particles having an average crystal particle size of crystal particles of 1 to 30 µm. The content of the free lime crystal particles is preferably 15 mass% or more. Furthermore, it is preferable that the expansion composition includes the free lime crystal particles and a heterophase present between the free lime crystal particles, wherein the heterophase contains one or more selected from the group consisting of ternesite, gehlenite, gypsum, ye'elimite, and calcium silicate. In addition, the expansive admixture contains anhydrous gypsum and the expansion composition.

## Description

### Technical Field

The present invention mainly relates to an expansion composition and an expansive admixture used in the civil engineering and construction industry.

### Background Art

Reduction of cracks and improvement of flexural capacity of concrete are important from the viewpoint of reliability, durability, aesthetics, and the like of a concrete structure, and further development of a technique of an expansion material which is a cement admixture having an effect of improving these is desired.

As an expansion material, a calcium sulfoaluminate-based expansion material, a lime-based expansion material, or the like has been known so far, and for example, an expansion material for concrete having excellent expansion characteristics, or an expansion material clinker has been proposed (Patent Literatures 1 to 3).

### Citation List

### Patent Literature

Patent Literature 1: JP 2002-029797 A
Patent Literature 2: JP 2008-201603 A
Patent Literature 3: JP 2008-156187 A

### Summary of Invention

### Technical Problem

In recent years, a cement composition containing such an expansion material has been required to have further improved flexural capacity (flexural strength). Further, in the flexural strength, when the expansion ratio is small, the effect of improving the flexural strength by introducing chemical prestress is reduced. On the other hand, even when the expansion ratio is large, the compressive strength of the base is reduced due to microstructural damage caused by excessive expansion, and as a result, the flexural strength has been reduced. Therefore, it is required to set the expansion ratio to an appropriate range.

An object of the expansion material (cement admixture) described in Patent Literature 1 is to provide an expansion material having excellent expansion performance with a small addition amount, and an object of the expansion materials (expansion compositions) described in Patent Literatures 2 and 3 is to provide an expansion composition having stable expansion development. As described above, the expansion materials described in Patent Literatures 1 to 3 have not been studied to improve flexural strength and have an appropriate expansion ratio in consideration of improvement in flexural strength.

The present invention has been made in view of such circumstances, and an object thereof is to provide an expansion composition having an appropriate expansion ratio and capable of improving flexural strength, and an expansive admixture.

### Solution to Problem

As a result of intensive studies to solve the above problems, the present inventors have found that the problems can be solved by including free lime crystal particles having a predetermined average crystal particle size, and have completed the present invention. That is, the present invention is as follows.
[1] An expansion composition including free lime crystal particles having an average crystal particle size of crystal particles of 1 to 30 µm.
[2] The expansion composition according to claim 1, wherein a content of the free lime crystal particles is 15 mass% or more.
[3] The expansion composition according to [1] or [2], including the free lime crystal particles and a heterophase present between the free lime crystal particles, wherein the heterophase contains one or more selected from the group consisting of ternesite, gehlenite, gypsum, ye'elimite, and calcium silicate.
[4] The expansion composition according to [3], wherein the heterophase contains gypsum, and the gypsum is contained in an amount of 3 mass% or more and 60 mass% or less.
[5] The expansion composition according to any one of [1] to [4], wherein an average aspect ratio (major axis/minor axis) of crystal particle sizes of the free lime crystal particles is 1.0 or more and 2.0 or less.
[6] The expansion composition according to any one of [1] to [5], wherein a standard deviation of maximum length of crystal particle size of the free lime crystal particles is 10.0 or less.
[7] The expansion composition according to any one of [3] to [6], wherein the heterophase contains at least one of ternesite and gehlenite, and the total amount of ternesite and gehlenite is 1 mass% or more in the heterophase.
[8] An expansive admixture containing anhydrous gypsum and the expansion composition according to any of [1] to [7].
[9] The expansive admixture according to [8], wherein the anhydrous gypsum contains 0.01 to 5.0 mass% of MgO and 0.01 to 1.0 mass% of SrO as chemical components.

### Advantageous Effects of Invention

According to the present invention, it is possible to provide an expansion composition having an appropriate expansion ratio and capable of improving flexural strength, and an expansive admixture.

### Brief Description of Drawings

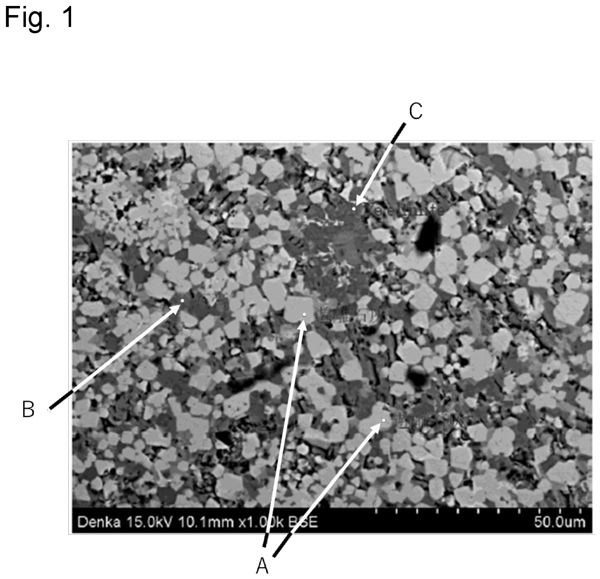

Fig. 1 is an SEM image of a surface of an expansion composition.

### Description of Embodiments

Hereinafter, the expansion composition and the expansive admixture of the present invention will be described in detail, but the present invention is not limited to the embodiment. Note that "%" and "part(s)" in the present description are on a mass basis unless otherwise limited. In addition, a numerical range defined using a term "to" includes numerical values at both ends (upper limit and lower limit) of "to".

### [Expansion Composition]

The expansion composition of the present invention is a composition including free lime crystal particles having an average crystal particle size of crystal particles of 1 to 30 µm.

The average crystal particle size of the free lime crystal particles included in the expansion composition is 1 to 30 µm, preferably 2 to 25 µm, and more preferably 3 to 20 µm. By including free lime in the expansion composition, expansion characteristics can be imparted. When the average crystal particle size of the free lime crystal particles is less than 1 µm, a sufficient expansion ratio cannot be obtained, and it is difficult to obtain the effect of improving the flexural strength. In addition, when the average crystal particle size of the free lime crystal particles exceeds 30 µm, the expansion ratio increases, the compressive strength decreases due to excessive expansion, and the flexural strength decreases. Therefore, the average crystal particle size of the free lime crystal particles is 1 to 30 µm.

As a method for measuring the average crystal particle size of the free lime crystal particles, the average crystal particle size can be determined, for example, by taking an SEM (scanning electron microscope) photograph, and calculating the average of 100 free lime crystal particles arbitrarily selected from the taken SEM photograph using appropriate image analysis software. As a method for selecting the free lime crystal particles, it is possible to distinguish from other minerals by using the analysis result of EDS (energy dispersive X-ray spectroscopy). As the image analysis software, for example, "Mac view" manufactured by Mountech Co., Ltd. can be used. Specifically, in the present embodiment, the major axis and minor axis of the circular or elliptical shape of the selected free lime crystal particles are determined by analysis software. Then, an average value of major axes (A) and an average value of minor axes (B) of these crystal particles are determined, and a value obtained by averaging these values ((A + B)/2) is defined as an "average crystal particle size". In the case of a circular shape, the diameter is the major axis and the minor axis, and they are the same numerical values.

The average crystal particle size of the free lime crystal particles can be adjusted by the firing temperature during production, and the average crystal particle size can be increased by increasing the firing temperature.

The content of the free lime crystal particles included in the expansion composition is 15 mass% or more, preferably 20 mass% or more and 60 mass% or less, and more preferably 40 mass% or more and 55 mass% or less. By setting the content of the free lime crystal particles in the expansion composition in the above range, it is possible to have an appropriate expansion ratio and can improve flexural strength.

In addition, the average aspect ratio (major axis/minor axis) of the free lime crystal particles included in the expansion composition of the present invention is preferably 1.0 or more and 2.0 or less, more preferably 1.1 or more and 1.9 or less, and still more preferably 1.2 or more and 1.8 or less. By setting the average aspect ratio to 1.0 or more and 2.0 or less, an appropriate expansion ratio can be obtained, and the flexural strength can be improved.

The average aspect ratio of the free lime crystal particles can be adjusted by changing the firing temperature and firing time during production.

The aspect ratio can be determined using the data used for determining the average crystal particle size, and the aspect ratio is 1 in the case of a circular shape, and can be determined from the major axis/minor axis in the case of an elliptical shape.

Furthermore, the standard deviation of maximum length of crystal particle size of the free lime crystal particles included in the expansion composition of the present invention is preferably 10.0 or less, more preferably 8.0 or less, and still more preferably 6.0 or less. By setting the standard deviation of maximum length of crystal particle size to 10.0 or less, an appropriate expansion ratio can be stably obtained, and the flexural strength can be improved. The standard deviation of maximum length of crystal particle size of the free lime crystal particles can be adjusted by changing the firing temperature and firing time during production.

The "maximum length of the crystal particle size" means the maximum length among the linear distances between any two points on one free lime crystal particle when the free lime crystal particle is observed with a SEM photograph. The maximum length can also be measured by capturing SEM images in image analysis software (for example, Mac view).

In addition, the expansion composition of the present invention preferably has a heterophase between free lime crystal particles. By providing a heterophase between the free lime crystal particles, the free lime crystal particles can be coated with the heterophase, and the reaction of the free lime crystal particles can be appropriately delayed. Therefore, expansion can be appropriately generated at the time when the cement starts to solidify (the time when moisture in the cement composition evaporates and shrinkage starts), which is considered to be a time when expansion is easily introduced, and the flexural strength can be improved by effectively introducing chemical prestress.

Fig. 1 is an SEM image of the surface of the expansion composition. The heterophase is present between the crystal particles of the free lime crystal particles in the SEM image of the surface of the expansion composition. Alternatively, it is present along an interface of the crystal particle. In the SEM image, one or more heterophases may be contained between the free lime crystal particles. In Fig. 1, an arrow A indicates free lime, an arrow B indicates gypsum (heterophase), and an arrow C indicates ye'elimite (heterophase) in the drawing.

As the heterophase, it is preferable to contain one or more selected from the group consisting of ternesite (2(2CaO·SiO₂)), gehlenite (2CaO·Al₂O₃·SiO₂), gypsum, ye'elimite (3CaO·3Al₂O₃·CaSO₄), and calcium silicate. Among them, gypsum is preferably included as a heterophasic component. In addition, it is more preferable to include gypsum and one or more selected from the group consisting of ternesite, gehlenite, and ye'elimite (3CaO·3Al₂O₃·CaSO₄).

By including the above component as the heterophase, the expansion ratio of the expansion composition including free lime crystal particles can be set to an appropriate expansion ratio.

### (Ternesite)

The heterophase of the expansion composition of the present embodiment can contain ternesite. Ternesite is a mineral represented by 2(2CaO·SiO₂)·CaSO₄. By containing ternesite, compressive stress (chemical prestress) in the concrete and tensile strain (chemical prestrain) in the reinforcing bars can be efficiently introduced and accumulated.

When ternesite is contained in the heterophase of the expansion composition, the amount of ternesite in the expansion composition is 0.5 to 15 mass%, and preferably 1 to 12 mass%. By setting the amount of ternesite to 15 mass% or less, the reactivity of the expansion composition can be enhanced, so that the compressive strength of the concrete to be produced can be improved, the crack generation load can be increased, and the crack width can be suppressed. In addition, when the content is 0.5 mass% or more, the effect of improving the crack generation load can be sufficiently exhibited.

### (Gehlenite)

The heterophase of the expansion composition of the present embodiment can contain gehlenite. Gehlenite is a mineral represented by 2CaO·Al₂O₃·SiO₂. Gehlenite has lower hydration activity than free lime, and by containing gehlenite, the reaction of free lime is moderately delayed, and expansion after the cement starts to harden makes it easier to introduce compressive stress in concrete.

When gehlenite is contained in the heterophase of the expansion composition, the amount of gehlenite in the expansion composition is more preferably 0.05 to 8 mass%, and still more preferably 0.1 to 3 mass%. When the content of gehlenite is within the above range, compressive stress (chemical prestress) in concrete and tensile strain (chemical prestrain) in reinforcement can be efficiently introduced and accumulated.

### (Gypsum)

The heterophase of the expansion composition of the present embodiment can contain gypsum. The content of gypsum in the expansion composition is preferably 3 mass% to 60 mass%, more preferably 3 mass% to 50 mass%, and still more preferably 10 mass% to 40 mass%.

### (Ye'elimite)

The heterophase of the expansion composition of the present embodiment can contain ye'elimite. Ye'elimite is a mineral represented by 3CaO·3Al₂O₃·CaSO₄. Ettringite (3CaO·Al₂O₃·3CaSO₄·32H₂O) is formed by hydration in the presence of gypsum or the like, which contributes to improvement of initial strength.

When the heterophase of the expansion composition contains ye'elimite, the amount of ye'elimite in the expansion composition is preferably 3 mass% to 30 mass%, and more preferably 8 mass% to 25 mass%. When the content is 3 mass% to 30 mass%, the initial strength can be improved.

### (Calcium silicate)

The heterophase of the expansion composition of the present embodiment can contain calcium silicate. The calcium silicate may contain dicalcium silicate other than γ-2CaO·SiO₂, calcium silicate other than 2CaO·SiO₂ such as tricalcium silicate 3CaO·SiO₂, rankinite 3CaO·2SiO₂, and wollastonite CaO·SiO₂, and the like.

The content of calcium silicate is preferably 1 mass% to 10 mass%, and more preferably 2 mass% to 8 mass% in the expansion composition. When the content is 1 mass% to 10 mass%, the strength can be improved.

The component constituting the heterophase preferably contains at least one of ternesite and gehlenite among the above components. By containing at least one of ternesite and gehlenite as the component constituting the heterophase, an appropriate expansion ratio can be obtained, and the flexural strength can be improved.

At this time, it is preferable that the total amount of ternesite and gehlenite is 1 mass% or more in the heterophase. The total amount of ternesite and gehlenite is more preferably 2 mass% or more. By setting the total amount of ternesite and gehlenite in the above range, an appropriate expansion ratio can be obtained, and the flexural strength can be improved. In addition, the total amount of ternesite and gehlenite is preferably 15 mass% or less, more preferably 13 mass% or less, and still more preferably 10 mass% or less.

In the present embodiment, the presence of the heterophase and the content of the component constituting the heterophase can be controlled by appropriately selecting, for example, the type and blending amount of each component contained in the expansion composition, the method for producing the expansion composition, and the like. Among them, for example, the use of a raw material mixture containing a CaO raw material, a SiO₂ raw material, and an Al₂O₃ raw material, the use of a rotary kiln lined in a furnace with a high-purity alumina brick, and/or the application of a predetermined concentration of alumina mortar to a brick surface inside the kiln, and the appropriate adjustment of conditions such as a firing temperature, dry pulverization, and granulation size are included as elements for setting the presence of the heterophase and the content of the component constituting the heterophase to a desired state.

The content of free lime in the expansion composition and the content of each mineral composition of the heterophase can be confirmed by a general analysis method. For example, the mineral composition of a pulverized sample can be quantified by confirming the mineral composition by powder X-ray diffraction and analyzing the data by a Rietveld method. In addition, the mineral composition amount can also be obtained by calculation based on the chemical component results.

### "Method for producing expansion composition"

Next, a method for producing the expansion composition will be described.

The method for producing the expansion composition includes a step of firing a raw material mixture containing a CaO raw material, a SiO₂ raw material, and an Al₂O₃ raw material by, for example, a kiln.

As the CaO raw material, those commercially available as industrial raw materials may be used, and for example, one or more selected from the group consisting of limestone, coal ash, slaked lime, and acetylene generation waste (by-product slaked lime) may be contained. Among them, slaked lime and by-product slaked lime may be used.

Here, the coal ash (fly ash and the like) is a general term for combustion ash obtained by burning coal, such as coal combustion ash discharged from a boiler of a thermal power plant. The coal ash is, for example, ash generated from a coal-fired power plant, and coal ash generated by combustion of fine powder coal and collected by falling from a combustion gas of a combustion boiler as it passes through an air preheater, an economizer, or the like; coal ash collected by an electrostatic precipitator; coal ash falling to the bottom of the combustion boiler; or the like is used.

As the SiO₂ raw material, a commercially available material as an industrial raw material may be used, and examples thereof include silica stone, silica sand, quartz, and diatomaceous earth. These may be used alone or in combination of two or more kinds thereof. These need not be used as long as a required amount of SiO₂ is contained in the CaO raw material or the Al₂O₃ raw material.

For example, in a case where coal ash containing SiO₂ is used as the CaO raw material, the above SiO₂ raw material need not be added.

As the Al₂O₃ raw material, a commercially available material as an industrial raw material may be used, but for example, one or more selected from the group consisting of bauxite, aluminum hydroxide, and aluminum residual ash may be contained. The aluminum residual ash may be mainly composed of aluminum hydroxide. Among these, bauxite may be used.

These raw materials are mixed and pulverized after being formulated to have a predetermined mineral composition proportion after the firing, thereby obtaining a raw material mixture.

The method of the mixing and pulverization is not particularly limited, and a dry pulverization method or a wet pulverization method can be applied. In a case of the wet pulverization method, it is necessary to perform a dehydration treatment in order to granulate the raw material mixture thereafter. In addition, in a case where quicklime is used as the raw material, it is desirable to pulverize in a dry state.

Furthermore, the ratio between the free lime crystal particles and the heterophase in the expansion composition can be controlled by adjusting a charging proportion of the raw materials.

The firing temperature can be, for example, 1,200°C to 1,600°C, and is preferably 1,300°C to 1,550°C, and more preferably 1,400°C to 1,450°C.

A kiln such as a rotary kiln can be used for the firing.

For example, a rotary kiln in which bricks of a sintering band are formed of high-purity alumina bricks having an Al₂O₃ content of equal to or more than 99% based on mass may be used, and/or an alumina mortar adjusted to an appropriate concentration may be applied to an inner surface of the bricks of the firing band in the rotary kiln before the firing.

A clinker is obtained by firing. The clinker may be pulverized by a known method to be obtained as a pulverized product.

Thus, an expansion composition is obtained.

The expansion composition may be a fired lump (clinker) obtained by firing raw material components, or may be a powder product of a clinker.

### [Expansive admixture]

The expansive admixture of the present invention includes anhydrous gypsum and the above expansion composition. When the cement composition contains this expansive admixture, generation of ettringite is promoted. By generating ettringite, an appropriate expansion ratio can be imparted to the obtained cured body, and the flexural strength can be improved.

In the present specification, the cement composition is used in the sense of containing a cement paste, a mortar composition, or a concrete composition.

The anhydrous gypsum contained in the expansive admixture preferably contains 0.01 to 5.0 mass% of MgO and 0.01 to 1.0 mass% of SrO as chemical components.

The content of MgO is more preferably 0.01 to 4.0 mass%, and still more preferably 0.01 to 3.0 mass%. In addition, the content of SrO is more preferably 0.01 to 0.08 mass%, and still more preferably 0.01 to 0.06 mass%.

By setting the amounts of MgO and SrO in the above ranges, an appropriate expansion ratio can be imparted.

The content of anhydrous gypsum is preferably 5 to 45 mass%, more preferably 10 to 30 mass%, and still more preferably 15 to 25 mass% in the expansive admixture. By setting the content of anhydrous gypsum in the above range, an appropriate expansion ratio can be obtained, and the flexural strength can be improved.

### [Cement composition]

A cement composition according to the present embodiment contains the expansive admixture of the present invention and cement.

An amount of the expansive admixture used varies depending on the purpose of use, but is usually preferably 20 to 60 kg and more preferably 30 to 50 kg per 1 m³ of concrete.

The cement is not particularly limited, and various types of Portland cements such as normal, early strength, ultrahigh early strength, low heat, and moderate heat can be used.

In addition, for these Portland cements, various mixed cements obtained by mixing blast furnace slag, fly ash, silica fume, or the like, filler cement obtained by mixing limestone fine powder, blast furnace slow cooling slag fine powder, or the like, waste-utilizing cement produced using municipal waste incineration ash, sewage sludge incineration ash, or the like as raw materials, so-called ecocement (R), mixed cement obtained by mixing waste-utilizing cements, commercially available fine particle cement, limestone calcined clay cement (LC3) obtained by mixing alumina cement, sulfoaluminate cement, and a clay mineral such as metakaolin or allophane, or the like can be used. It is also possible to use various cements or various mixed cements after pulverization. Furthermore, it is also possible to use those which are adjusted by increasing or decreasing the amount of components normally used in cement, and it is also possible to use one or more of the above in combination.

An amount of water used is not particularly limited, but usually, the water/binder ratio is, for example, preferably 25 to 60% and more preferably 30 to 55% with respect to the binder composed of the cement and the expansive admixture.

A mixing method in producing the cement composition is not particularly limited, and any existing device can be used as a mixing device, and for example, a tilt mixer, a forced biaxial mixer, an omni-mixer, a Henschel mixer, a V-type mixer, a Nauta mixer, or the like can be used.

In the mixing of the cement composition and water, each of the materials may be mixed at the time of construction, or some or all of the materials may be mixed in advance.

The curing method of the cement composition is not particularly limited, and any curing method such as curing at normal temperature and normal pressure, steam curing, steam curing at high-temperature and high-pressure, and pressurized curing, which is generally performed, can be applied.

Furthermore, in the cement composition, within a range that does not substantially hinder the object of the present invention, it is possible to use, in combination, one or more kinds of admixtures among aggregates such as sand and gravel, a rapid hardening material, a setting modifier, a water reducing agent, a high-performance water reducing agent, an AE agent, an AE water reducing agent, a high-performance AE water reducing agent, a thickener, an antirust agent, an antifreeze agent, a hydration heat suppressant, a polymer emulsion, a clay mineral such as bentonite and montmorillonite, an ion exchanger such as zeolite, hydrotalcite, and hydrocalumite, a sulfate such as aluminum sulfate and sodium sulfate, a phosphate, and a boric acid.

### Examples

Hereinafter, the present invention will be described more specifically with reference to examples, but the present invention is not limited to these examples.

### (Experimental Example 1)

### (Preparation of expansion composition)

The expansion composition was mixed using calcium carbonate, calcium sulfate dihydrate, aluminum hydroxide, and silicon dioxide so that each component had the content shown in Table 1, heat-treated at 1,400°C for 2 hours, left to stand until reaching room temperature, and pulverized using a ball mill. The Blaine value was 3,500 cm²/g.

Also, the average crystal particle size of the free lime crystal particles was determined by taking an SEM photograph of the surface of the prepared expansion composition and using image analysis software (Mac view). Specifically, any 100 free lime crystal particles were selected from the obtained SEM image using image analysis software, and the major axis and minor axis of the circular or elliptical shape were determined using image analysis software. An average value of major axes (A) and an average value of minor axes (B) of these crystal particles were determined, and a value obtained by averaging these values ((A + B)/2) was defined as an "average crystal particle size". In the case of a circular shape, the diameter is the major axis and the minor axis, and they are the same numerical values.

### (Materials used)

Calcium carbonate: reagent grade 1, commercially available product
Calcium sulfate dihydrate: reagent grade 1, commercially available product
Aluminum hydroxide: reagent grade 1, commercially available product
Silicon dioxide: reagent grade 1, commercially available product

### (Method for producing concrete)

Using the prepared expansion composition, a concrete composition was kneaded using 380 kg/m³ cement, 40 kg/m³ expansion composition, 709 kg/m³ fine aggregate, 1072 kg/m³ coarse aggregate, and 160 kg/m³ water, in a concrete formulation of slump 8.0 ± 2.5 cm, air content: 2.0 ± 1.5%, W/C: 38%, and s/a: 40%. The obtained concrete composition was subjected to preliminary curing at a temperature of 20°C for 10 hours, the temperature was raised at a heating rate of 20°C/hr, and steam curing was performed by maintaining the temperature at a maximum temperature of 65°C for 2 hours, and then the temperature was naturally lowered to a material age of 1 day to produce concrete. The expansion ratio and flexural strength of the produced concrete were measured.

### (Materials used)

Cement: ordinary Portland cement conforming to JIS R 5210:2019, commercially available product
Water: tap water
Fine aggregate: natural sand from Himekawa, Niigata-ken, specific gravity 2.62
Coarse aggregate: crushed stone from Himekawa, Niigata-ken, maximum dimension 25 mm, specific gravity 2.64

### (Evaluation method)

Expansion ratio: The expansion ratio on the 7th day of curing was measured on the basis of the test method of JIS A 6202 Expansive additive for concrete. The expansion ratio is preferably 200 to 1000 × 10⁻⁶, and more preferably 400 to 850 × 10⁻⁶ in consideration of improvement in flexural strength.

Flexural strength: Uniaxially constrained expansion test bodies in accordance with JIS A 6202:2017 Annex B Method B were each prepared, demolded at a material age of 1 day, and then cured in water at 20°C for 7 days. Pi-shape displacement transducer was attached to each of the test bodies. A flexural strength test in accordance with JIS A 1106:2018 was performed, and the flexural strength under the constraint condition was calculated from the load at the time when a crack with a width of 0.05 mm or more occurred.

**[Table 1]**

| Test No. | Expansion composition (Composition) | | | | | | Crystal particle size of free lime (µm) | Evaluation results | | Remark |
|---|---|---|---|---|---|---|---|---|---|---|
| | Free lime (mass%) | Heterophase | | | | | | Expansion ratio (×10⁻⁶) | Flexural strength (N/mm²) | |
| | | Ternesite (mass%) | Gehlenite (mass%) | Gypsum (mass%) | Ye'elimite (mass%) | Calcium silicate (mass%) | | | | |
| 1-1 | 50.0 | 4.0 | 1.4 | 29.0 | 3.0 | 10.0 | 0.5 | 300 | 5.7 | Comparative Example |
| 1-2 | 48.0 | 3.0 | 0.6 | 33.0 | 5.0 | 8.2 | 1 | 520 | 6.4 | Example |
| 1-3 | 46.6 | 4.8 | 1.0 | 29.9 | 4.4 | 9.3 | 5 | 600 | 6.8 | Example |
| 1-4 | 45.0 | 0.4 | 0.1 | 30.2 | 20.0 | 0.6 | 30 | 590 | 6.7 | Example |
| 1-5 | 52.0 | 2.0 | 0.4 | 28.0 | 5.0 | 8.0 | 70 | 1340 | 5.9 | Comparative Example |
| 1-6 | Without addition of expansion material | | | | | | | 0 | 5.1 | Reference Example |

From the results shown in Table 1, it can be confirmed that the concrete using the expansion composition including free lime crystal particles in which the average crystal particle size of crystal particles is included in the range of the present invention (Test Nos. 1-2 to 4) has improved flexural strength as compared with Comparative Examples in which the average crystal particle size is out of the range of the present invention (Test Nos. 1-1, 1-5). In addition, also regarding the expansion ratio, it can be confirmed that concrete using free lime crystal particles having a crystal particle size smaller than the range of the present invention (Test No. 1-1) has a low expansion ratio, and concrete using free lime crystal particles having a crystal particle size larger than the range of the present invention (Test No. 1-5) has a high expansion ratio and a flexural strength lower than those of Test Nos. 1-2 to 4, and when the average particle size of the free lime crystal particles is not included in the range of the present invention, the effect of improving the flexural strength is not sufficiently exhibited, and the expansion ratio is also not included in the preferable range.

Furthermore, the evaluation was also performed for concrete without addition of expansion material (Test No. 1-6) as a reference example. Regarding Test No. 1-6 in which an expansion material was not added, the expansion ratio of the produced concrete was 0, and the flexural strength was also low.

### (Experimental Example 2)

In Experimental Example 2, the expansion ratio and flexural strength of the produced concrete were measured by changing the components contained in the heterophase.

As in Experimental Example 1, the expansion compositions were prepared by mixing calcium carbonate, calcium sulfate dihydrate, aluminum hydroxide, and silicon dioxide so that each component had the content shown in Table 2.

Concrete was also produced in the same manner as in Experimental Example 1. The results are shown in Table 2.

**[Table 2]**

| Test No. | Expansion composition (Composition) | | | | | | Crystal particle size of free lime (µm) | Evaluation results | | Remark |
|---|---|---|---|---|---|---|---|---|---|---|
| | Free lime (mass%) | Heterophase | | | | | | Expansion ratio (×10⁻⁶) | Flexural strength (N/mm²) | |
| | | Ternesite (mass%) | Gehlenite (mass%) | Gypsum (mass%) | Ye'elimite (mass%) | Calcium silicate (mass%) | | | | |
| 1-3 | 46.6 | 4.8 | 1 | 29.9 | 4.4 | 9.3 | 5 | 600 | 6.8 | Example |
| 2-1 | 43 | 0 | 0 | 52 | 0 | 0 | 5 | 580 | 6.7 | Example |
| 2-2 | 54.4 | 5.8 | 0 | 35.2 | 0 | 0 | 5 | 720 | 7.2 | Example |
| 2-3 | 44 | 0 | 0.8 | 30 | 0 | 25 | 5 | 500 | 6.4 | Example |
| 2-4 | 42 | 0.8 | 0 | 45 | 12 | 0 | 5 | 580 | 6.6 | Example |
| 2-5 | 43 | 0.4 | 0.4 | 33 | 2 | 20 | 5 | 590 | 6.7 | Example |
| 2-6 | 14 | 0.4 | 0.4 | 55 | 20 | 7 | 5 | 360 | 6.1 | Example |
| 2-7 | 16 | 0.4 | 0.4 | 51 | 20 | 8 | 5 | 420 | 6.3 | Example |
| 2-8 | 60 | 5 | 0.4 | 20 | 4 | 7 | 5 | 810 | 7.5 | Example |
| 2-9 | 55 | 2 | 2 | 0 | 20 | 20 | 5 | 780 | 7.4 | Example |
| 2-10 | 50 | 3 | 3 | 2 | 19 | 18 | 5 | 730 | 7.2 | Example |
| 2-11 | 50 | 2 | 2 | 4 | 20 | 18 | 5 | 720 | 7.1 | Example |
| 2-12 | 20 | 0.5 | 0.5 | 58 | 15 | 5 | 5 | 440 | 6.5 | Example |
| 2-13 | 15 | 0.5 | 0.5 | 62 | 10 | 10 | 5 | 400 | 6.2 | Example |

From the results shown in Table 2, it can be confirmed that the flexural strength can be improved and the expansion ratio is also within an appropriate range by having at least one or more heterophases.

In addition, it can be confirmed that the concrete using the expansion composition in which the content of the free lime crystal particles is 15 mass% or more (Test Nos. 2-7, 8) can improve the flexural strength as compared with the concrete using the expansion composition in which the content is 14 mass% (Test No. 2-6), and the expansion ratio is also within an appropriate range.

### (Experimental Example 3)

In Experimental Example 3, an expansive admixture obtained by adding anhydrous gypsum to the expansion composition was prepared, and the expansion ratio and flexural strength of concrete produced using the prepared expansive admixture were measured.

The expansion compositions were produced in the same manner as in Test No. 1-3.

Anhydrous gypsum was added to the prepared expansion composition at a ratio shown in Table 3 with respect to 100 parts by mass of the expansion composition to prepare the expansive admixture. Using the prepared expansive admixture, the expansive admixture was added in the same amount as the expansion composition, and concrete was produced in the same manner as in Experimental Example 1. The results are shown in Table 3.

### (Materials used)

Anhydrous gypsum: anhydrous gypsum having the composition shown in Table 4 was used.

**[Table 3]**

| Test No. | Expansion composition (Composition) | | | | | | Crystal particle size of free lime (µm) | Used gypsum | Addition amount of gypsum (with respect to 100 parts by mass of expansion composition) (parts by mass) | Evaluation results | | Remark |
|---|---|---|---|---|---|---|---|---|---|---|---|---|
| | Free lime (mass%) | Heterophase | | | | | | | | Expansion ratio (×10⁻⁶) | Flexural strength (N/mm²) | |
| | | Ternesite (mass%) | Gehlenite (mass%) | Gypsum (mass% ) | Ye'elimite (mass%) | Calcium silicate (mass%) | | | | | | |
| 1-3 | 46.6 | 4.8 | 1.0 | 29.9 | 4.4 | 9.3 | 5 | - | 0 | 600 | 6.8 | Example |
| 3-1 | 46.6 | 4.8 | 1.0 | 29.9 | 4.4 | 9.3 | 5 | A | 10 | 550 | 7.2 | Example |
| 3-2 | 46.6 | 4.8 | 1.0 | 29.9 | 4.4 | 9.3 | 5 | A | 20 | 520 | 7.7 | Example |
| 3-3 | 46.6 | 4.8 | 1.0 | 29.9 | 4.4 | 9.3 | 5 | A | 40 | 500 | 6.9 | Example |
| 3-4 | 46.6 | 4.8 | 1.0 | 29.9 | 4.4 | 9.3 | 5 | B | 20 | 510 | 7.6 | Example |
| 3-5 | 46.6 | 4.8 | 1.0 | 29.9 | 4.4 | 9.3 | 5 | C | 20 | 530 | 7.7 | Example |

**[Table 4]**

| | Chemical component (mass%) | | |
|---|---|---|---|
| | Gypsum A | Gypsum B | Gypsum C |
| SO₃ | 56.83 | 52.28 | 54.86 |
| CaO | 41.32 | 41.15 | 39.78 |
| MgO | 0.06 | 2.90 | 2.17 |
| SiO₂ | 0.77 | 2.13 | 1.71 |
| Al₂O₃ | 0.75 | 0.46 | 0.46 |
| Fe₂O₃ | 0.11 | 0.44 | 0.24 |
| SrO | 0.08 | 0.31 | 0.50 |
| Na₂O₃ | 0.02 | 0.07 | 0.05 |
| K₂O | 0.06 | 0.16 | 0.17 |
| TiO₂ | - | 0.05 | 0.05 |
| Cl | - | 0.03 | 0.01 |
| MnO | - | 0.02 | - |
| P₂O₅ | 0.00 | 0.01 | 0.01 |
| Total | 100.0 | 100.0 | 100.0 |

From the results shown in Table 3, it could be confirmed that the flexural strength was further improved by using the expansive admixture obtained by adding anhydrous gypsum to the expansion composition. In the concrete using the expansive admixture added with 10 to 40 parts by mass of gypsum with respect to 100 parts by mass of the expansion composition, in particular, the effect of improving the flexural strength was obtained.

### (Experimental Example 4)

In Experimental Example 4, the expansion ratio and flexural strength of concrete produced using an auxiliary cement material as a substitute for cement were measured.

The expansion compositions were produced in the same manner as in Test No. 1-3.

Concrete was produced in the same manner as in Experimental Example 1 by replacing the cement with the auxiliary cement material shown in Table 5 in the amount shown in Table 5 with respect to 100 parts by mass of the cement. Commercially available products were used as blast furnace slag fine powder, fly ash, metakaolin, and sewage sludge incineration ash. The results are shown in Table 5.

**[Table 5]**

| Test No. | Expansion composition (Composition) | | | | | | Crystal particle size of free lime (µm) | Auxiliary cement material | Replaced amount of cement (parts by mass) | Evaluation results | | Remark |
|---|---|---|---|---|---|---|---|---|---|---|---|---|
| | Free lime (mass%) | Heterophase | | | | | | | | Expansion ratio (×10⁻⁶) | Flexural strength (N/mm²) | |
| | | Ternesite (mass%) | Gehlenite (mass%) | Gypsum (mass%) | Ye'elimite (mass%) | Calcium silicate (mass%) | | | | | | |
| 1-3 | 46.6 | 4.8 | 1 | 29.9 | 4.4 | 9.3 | 5 | - | - | 600 | 6.8 | Example |
| 4-1 | 46.6 | 4.8 | 1 | 29.9 | 4.4 | 9.3 | 5 | Blast furnace slag | 40 | 520 | 7.3 | Example |
| 4-2 | 46.6 | 4.8 | 1 | 29.9 | 4.4 | 9.3 | 5 | Fly ash | 10 | 510 | 6.8 | Example |
| 4-3 | 46.6 | 4.8 | 1 | 29.9 | 4.4 | 9.3 | 5 | Metakaolin | 10 | 490 | 7.5 | Example |
| 4-4 | 46.6 | 4.8 | 1 | 29.9 | 4.4 | 9.3 | 5 | Sewage sludge incineration ash | 10 | 500 | 6.4 | Example |

From the results shown in Table 5, even when the auxiliary cement material was used instead of the cement, the flexural strength could be improved, and the expansion ratio could also be set in a preferable range.

### (Experimental Example 5)

In Experimental Example 5, the expansion ratio and flexural strength of concrete were measured using expansion compositions having different average aspect ratios (major axis/minor axis) of crystal particle sizes and different standard deviations of maximum lengths of the free lime crystal particles. As in Experimental Example 1, the expansion compositions were prepared by mixing calcium carbonate, calcium sulfate dihydrate, aluminum hydroxide, and silicon dioxide so that each component had the content shown in Table 5, and conditions of the firing temperature and the firing time were changed to obtain expansion compositions including free lime crystal particles having an average aspect ratio and a standard deviation shown in Table 6.

Using the obtained expansion compositions, concrete was produced in the same manner as in Experimental Example 1. The results are shown in Table 6.

**[Table 6]**

| Test No. | Expansion composition (Composition) | | | | | | Crystal particle size of free lime (µm) | Average aspect ratio (-) | Standard deviation of maximum length (-) | Evaluation results | | Remark |
|---|---|---|---|---|---|---|---|---|---|---|---|---|
| | Free lime (mass%) | Heterophase | | | | | | | | Expansion ratio (×10⁻⁶) | Flexural strength (N/mm²) | |
| | | Ternesite (mass%) | Gehlenite (mass%) | Gypsum (mass%) | Ye'elimite (mass%) | Calcium silicate (mass%) | | | | | | |
| 1-3 | 46.6 | 4.8 | 1 | 29.9 | 4.4 | 9.3 | 5 | 1.37 | 2.01 | 600 | 6.8 | Example |
| 5-1 | 46.6 | 4.8 | 1 | 29.9 | 4.4 | 9.3 | 5 | 2.05 | 1.80 | 520 | 6.4 | Example |
| 5-2 | 46.6 | 4.8 | 1 | 29.9 | 4.4 | 9.3 | 5 | 1.39 | 10.60 | 540 | 6.5 | Example |

### Industrial Applicability

The expansion composition of the present invention can be widely applied in the civil engineering and construction industry.

## Claims

1. An expansion composition comprising free lime crystal particles having an average crystal particle size of crystal particles of 1 to 30 µm.

2. The expansion composition according to claim 1,
wherein a content of the free lime crystal particles is 15 mass% or more.

3. The expansion composition according to claim 1 or 2, comprising the free lime crystal particles and a heterophase present between the free lime crystal particles, wherein the heterophase contains one or more selected from the group consisting of ternesite, gehlenite, gypsum, ye'elimite, and calcium silicate.

4. The expansion composition according to claim 3,
wherein the heterophase contains gypsum, and the gypsum is contained in an amount of 3 mass% or more and 60 mass% or less.

5. The expansion composition according to claim 1 or 2, wherein an average aspect ratio (major axis/minor axis) of crystal particle sizes of the free lime crystal particles is 1.0 or more and 2.0 or less.

6. The expansion composition according to claim 1 or 2, wherein a standard deviation of maximum length of crystal particle size of the free lime crystal particles is 10.0 or less.

7. The expansion composition according to claim 3,
wherein the heterophase contains at least one of ternesite and gehlenite, and the total amount of ternesite and gehlenite is 1 mass% or more in the heterophase.

8. An expansive admixture comprising anhydrous gypsum and the expansion composition according to claim 1 or 2.

9. The expansive admixture according to claim 8,
wherein the anhydrous gypsum contains 0.01 to 5.0 mass% of MgO and 0.01 to 1.0 mass% of SrO as chemical components.
